(19) Europäisches Patentamt / European Patent Office / Office européen des brevets

(11) **EP 4 400 310 A1**

(12) **EUROPÄISCHE PATENTANMELDUNG**

(43) Veröffentlichungstag:
**17.07.2024 Patentblatt 2024/29**

(21) Anmeldenummer: **24150853.0**

(22) Anmeldetag: **09.01.2024**

(51) Internationale Patentklassifikation (IPC):
**B32B 27/36** (2006.01)   **B32B 7/022** (2019.01)
**B32B 7/023** (2019.01)   **B32B 7/027** (2019.01)
**B32B 7/06** (2019.01)   **B32B 27/08** (2006.01)
**B32B 27/16** (2006.01)   **B32B 27/18** (2006.01)

(52) Gemeinsame Patentklassifikation (CPC):
**B32B 7/023; B29C 48/16; B32B 7/022;
B32B 7/027; B32B 7/06; B32B 27/08; B32B 27/16;
B32B 27/18; B32B 27/36;** B32B 2250/02;
B32B 2250/03; B32B 2250/244; B32B 2250/40;
B32B 2264/02; B32B 2264/10;   (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **11.01.2023 DE 102023100507**

(71) Anmelder: **Mitsubishi Polyester Film GmbH
65203 Wiesbaden (DE)**

(72) Erfinder:
• **Peiffer, Herbert
55126 Mainz (DE)**
• **Hummel, Miriam
65385 Rüdesheim (DE)**
• **Jesberger, Martin
55128 Mainz (DE)**
• **Kuhmann, Bodo
65594 Runkel (DE)**

(74) Vertreter: **Schweitzer, Klaus
Plate Schweitzer Zounek
Patentanwälte
Rheingaustrasse 196
65203 Wiesbaden (DE)**

(54) **KOEXTRUDIERTE, HEISSSIEGELBARE UND PEELFÄHIGE POLYESTERFOLIE, VERFAHREN ZU IHRER HERSTELLUNG UND IHRE VERWENDUNG**

(57) Die Erfindung betrifft eine transparente koextrudierte und biaxial orientierte heißsiegelbare und peelfähige Polyesterfolie mit einer Basisschicht (B) und mindestens einer auf der Basisschicht (B) aufgebrachten Deckschicht (A). Die Deckschicht (A) ist heißsiegelbar und zeichnet sich durch eine gute Peelbarkeit zu aPET-Menüschalen, insbesondere in der Kälte, aus. Die Packung weist ein "medium Cold-Peel" auf, d.h., sie wird durch Aufwendung einer deutlich spürbaren Kraft geöffnet, ohne dass dabei die Folie einreißt. Weiterhin betrifft die Erfindung ein Verfahren zur Herstellung der Folie und ihre Verwendung.

**Fig. 3**

EP 4 400 310 A1

**(Forts. nächste Seite)**

(52) Gemeinsame Patentklassifikation (CPC): (Forts.)
B32B 2264/1021; B32B 2264/303; B32B 2270/00;
B32B 2307/31; B32B 2307/412; B32B 2307/518;
B32B 2307/7376; B32B 2307/748; B32B 2439/40;
B32B 2439/70

**Beschreibung**

**Patentfamilie**

Die Erfindung betrifft eine transparente koextrudierte und biaxial orientierte heißsiegelbare und peelfähige Polyesterfolie mit einer Basisschicht (B) und mindestens einer auf der Basisschicht (B) aufgebrachten Deckschicht (A). Die Deckschicht (A) ist heißsiegelbar und zeichnet sich durch eine gute Peelbarkeit zu aPET-Menüschalen, insbesondere in der Kälte, aus. Die Packung weist ein "medium Cold-Peel" auf, d.h., sie wird durch Aufwendung einer deutlich spürbaren Kraft geöffnet, ohne dass dabei die Folie einreißt. Die Erfindung betrifft weiterhin ein Verfahren zur Herstellung der Folie und ihre Verwendung.

**Hintergrund**

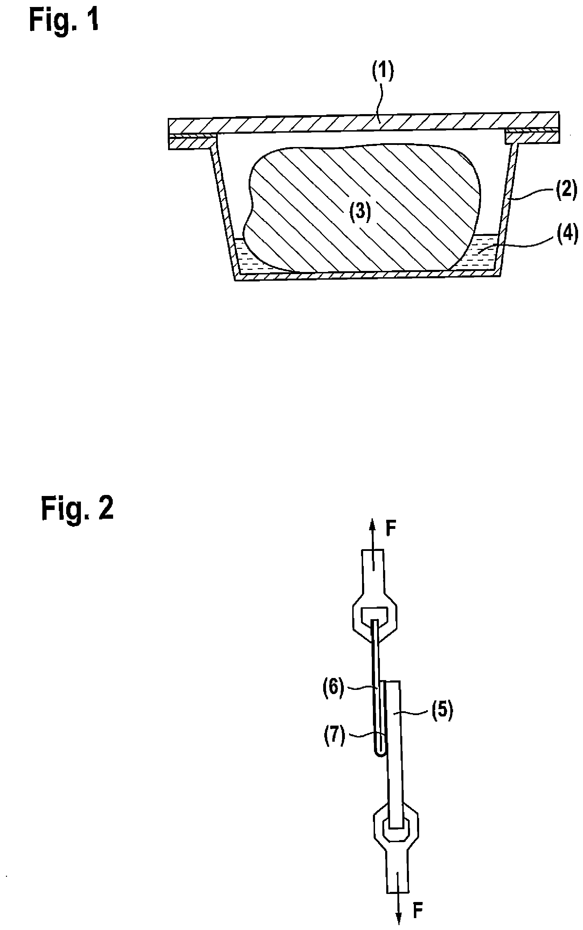

Transparente Menüschalen aus aPET (aPET = amorphes PET), die mit einer aufgesiegelten Folie (der Deckelfolie) peelbar verschlossen werden, finden ihren Einsatz bei Salaten und frischen Früchten, daneben aber auch bei der Herstellung von Verpackungen von frischem Fleisch und Geflügel. Die Lebensmittel werden nach ihrer Zubereitung in Menüschalen (engl. trays) eingefüllt (vgl. Figur 1). Auf den Rand der Menüschale wird eine Deckelfolie mittels Heißsiegelung aufgesiegelt, so dass eine verschlossene Packung entsteht und das Lebensmittel gegen äußere Einflüsse geschützt ist. Die Versiegelung (= Heißsiegelung) der Menüschalen erfolgt bei Temperaturen zwischen 100 und 160 °C.

Die Packungen werden in der Regel bei einer Temperatur, die deutlich niedriger ist als die Umgebungstemperatur, hergestellt. Eine typische Temperatur, bei der der Versiegelungsvorgang der Packung stattfindet, beträgt 4 °C. Der Transport und die Lagerung der versiegelten Packungen erfolgen ebenfalls in dieser gekühlten Atmosphäre.

Von den Packungen wird - unabhängig von der angewandten Siegeltemperatur - gefordert, dass die Siegelung von Menüschale und Deckelfolie "fest", d.h. widerstandsfähig ist. Die Siegelung muss gasdicht sein und darf z.B. beim Transport nicht aufgehen. Beim Öffnen der Packung wird gewünscht, dass der Kunde die Deckelfolie von der Menüschale abziehen kann, ohne sie dabei zu zerreißen. Dieser Vorgang wird herkömmlich mit "Peelen" bezeichnet.

Zur Sicherstellung einer einwandfreien Versiegelung hat sich in der Industrie mittlerweile etabliert, das Siegel- und Peelverhalten der Packungen unter Bedingungen zu überprüfen und zu beurteilen, wie sie direkt nach ihrer Herstellung vorherrschen, insbesondere bei einer niedrigen Temperatur von ca. 4° C. Die Prüfung der Packung umfasst dabei im Wesentlichen die beiden folgenden Punkte:

- Die Packung muss eine widerstandsfähige Siegelung aufweisen

- Die Packung muss händisch durch "Aufziehen" geöffnet werden können, ohne dass dabei die Deckelfolie ein- oder abreißt.

Allgemein wird diese Eigenschaft der Packung mit "Cold-Peel " bezeichnet, siehe hierzu auch die Ausführungen in der EP 3 248 777 B1. Eine typische Temperatur, bei der das "Cold-Peel" Verhalten der Packung geprüft wird, sind 4 °C. Wird die Packung hierbei durch Aufwendung einer deutlich spürbaren Kraft geöffnet, ohne dass dabei die Deckelfolie einreißt, so spricht man von einem "medium Cold-Peel".

Neben dem "medium Peel" unterscheidet man noch "easy Peel" und "strong Peel", siehe hierzu auch die Ausführungen in der EP 3 248 777 B1 und in der EP 3 437 853 B1.

| Leichte Peelbarkeit (easy Peel) | Peelkraft im Bereich von ungefähr 2 bis 3 N je 15 mm Streifenbreite |
|---|---|
| Widerstandsfähige Peelbarkeit (medium Peel) | Peelkraft im Bereich von ungefähr 3 bis 7 N je 15 mm Streifenbreite |
| Starke, widerstandsfähige Peelbarkeit (strong Peel) | Peelkraft im Bereich von mehr als 7 N je 15 mm Streifenbreite |

Finden die Peelversuche in der Kälte statt (bspw. bei 4 °C), so spricht man von "easy Cold-Peel", "medium Cold-Peel" bzw. "strong Cold-Peel".

Eine widerstandsfähige Peelbarkeit wird insbesondere bei Verpackungen von frischem Fleisch und Geflügel gewünscht.

Derzeit werden Packungen mit "medium Cold-Peel" Eigenschaften aus mehrschichtigen Kunststofffolien, sowohl für die Menüschale als auch für die siegelfähige Deckelfolie, hergestellt.

Ein typisches Material für den Aufbau von solchen Verpackungen ist Polyester. Für die Menüschale wird dann typischerweise thermoformbares aPET und für die Deckelfolie z.B. biaxial orientiertes PET verwendet. Auf die Versiegelungsschichten der beiden Folien wird ein von Polyester verschiedener Kunststoff aufgebracht.

Diese andere Art von Kunststoff ist so ausgesucht, dass sie bei der gewünschten Siegeltemperatur schmelzbar und im geschmolzenen Zustand duktiler als aPET ist. Ein typisches Material hierfür ist Polyethylen (PE), welches einen sehr niedrigen Schmelzpunkt aufweist und im geschmolzenen Zustand duktil ist. Das PE wird in der Regel durch Heißlaminieren auf die jeweiligen Polyesterfolien aufgebracht.

Verpackungen, bei denen die Basisschichten für die Menüschale und für die Deckelfolie aus Polyester und die Siegelschichten aus PE bestehen, sind am Markt als PET-PE-Lösung bekannt.

Aus Umweltschutzgründen sind jedoch Verpackungsmaterialien erwünscht, die möglichst nur aus einem sortenreinen Rohstoff bestehen. Im Unterschied zur PET-PE-Lösung darf dann kein PE verwendet werden.

In der vorliegenden Erfindung wird eine Lösung für eine siegelbare und peelfähige Deckelfolie bereitgestellt, welche nur auf Basis von Polyesterrohstoffen aufgebaut ist, und dennoch die erwünschten Siegel- und Peeleigenschaften ermöglicht, wie sie von herkömmlichen PET-PE Lösungen bekannt sind. Als Material für die Menüschale wird dabei von aPET ausgegangen, welches in der Industrie bekannt und Stand der Technik ist.

## Stand der Technik

Siegelbare und peelfähige PET-Folien sind bekannt.

In der EP-A 0 379 190 wird eine koextrudierte, biaxial orientierte Polyesterfolie beschrieben, die eine Basisschicht aus Polyester und mindestens eine Siegelschicht aus einer Polyester-Zusammensetzung umfasst. Die Polymermischung für die Siegelschicht enthält zwei Polyester, von denen zumindest einer aliphatische Dicarbonsäuren und/oder aliphatische Diole enthält. Die Versiegelungsenergie, die zwischen zwei sich gegenüberliegenden, miteinander verbundenen Versiegelungsfolienschichten gemessen wird (FIN Siegelung), beträgt mehr als $400g_{force} \cdot cm/15mm$. Die Folie zeichnet sich durch gute Peeleigenschaften gegen sich selbst aus (FIN Siegelung), über das Peelverhalten gegen Menüschalen aus aPET finden sich jedoch keine Hinweise. Insbesondere aber ist die Folie gemäß dieser Erfindung verbesserungswürdig in ihrer Herstell- und ihrer Verarbeitbarkeit.

In der WO 02/05186 A1 wird ein Verfahren zur Herstellung peelfähiger Folien beschrieben, bei dem die heißsiegelbare und peelfähige Schicht in-line auf die Polyesterfolie aufgebracht wird. Angewendet wird die Schmelz-Beschichtung, wobei vorzugsweise die längsgestreckte Folie mit dem heißsiegelbaren, peelfähigen Polymer beschichtet wird. Das heißsiegelbare, peelfähige Polymer enthält Copolyester auf Basis von aromatischen und aliphatischen Säuren, sowie auf Basis von aliphatischen Diolen. Die offenbarten Copolymere haben Glasübergangstemperaturen von unter -10 °C; weshalb sie sich nicht in üblichen Walzenstreckverfahren orientieren lassen (Kleben an den Walzen). Nachteilig an dem angewendeten Verfahren ist, dass nur vergleichsweise dünnflüssige Polymere (max. 50 Pa • sec) mit niedrigem Molekulargewicht verwendet werden können. Daraus resultieren nachteilige Peel-Eigenschaften der Folie.

In der EP 1 475 228 B1 wird eine coextrudierte, heißsiegelbare und peelfähige, biaxial orientierte Polyesterfolie mit einer Basisschicht (B) und mindestens einer darauf aufgebrachten Deckschicht (A) beschrieben. Die Deckschicht (A) ist heißsiegelbar und zeichnet sich durch eine mittlere Peelbarkeit, insbesondere zu aPET-Menüschalen aus. Die Deckschicht (A) enthält Polyester auf Basis von aromatischen und aliphatischen Säuren und aliphatischen Diolen. Des Weiteren enthält die Deckschicht (A) ein mit Polyester unverträgliches, anti-PET-Polymer. Die Deckschicht (A) besteht zu mindestens 60 Gew.-% aus einem Polyester und zu 3-30 Gew.-% aus anti-PET-Polymer. Der Polyester ist aus 10-95 Mol-% an Einheiten aufgebaut, die auf mindestens eine aromatische Dicarbonsäure und 5-90 Mol-% an Einheiten, die auf mindestens eine aliphatische Dicarbonsäure zurückgehen. Die Folie besitzt zu aPET Menüschalen kein "Cold-Peel".

## Aufgabenstellung

Aufgabe der vorliegenden Erfindung war es, eine koextrudierte, heißsiegelbare und peelfähige, biaxial orientierte Polyesterfolie zur Verwendung als Deckelfolie in einer lebensmitteltauglichen Einstoffverpackung zur Verfügung zu stellen, die sich durch gute Siegel- und Peeleigenschaften gegenüber Menüschalen aus aPET auszeichnet. Von der Deckelfolie wird gefordert, dass sie beim Abziehen von der Menüschale "medium Cold-Peel" Eigenschaften aufweist. Sie soll die Nachteile von Folien nach dem Stand der Technik nicht aufweisen und sich insbesondere durch die folgenden Punkte/Eigenschaften auszeichnen:

- Die Folie, geeignet als Deckelfolie zur Siegelung auf aPET Menüschalen, ist allein aus Polyesterrohstoffen aufgebaut

- Die Folie bleibt als Deckelfolie nach erfolgter Versiegelung auf einer Menüschale aus aPET in gekühlter Umgebung fest verschlossen (gleich widerstandsfähige Siegelung) und löst sich keinesfalls, z.B. durch Erschütterungen beim Transport

- Die Folie weist als Deckelfolie nach der Versiegelung mit einer Menüschale aus aPET sehr gute "Cold-Peel-Eigenschaften auf. Die Peelkraft (gemessen im kalten Zustand der Packung bei 4 °C) liegt im Bereich von ungefähr 3 bis 7 N je 15 mm Streifenbreite der Folien. Die Folie lässt sich von der Menüschale abziehen-(Peelen), ohne dass sie dabei einreißt oder weiterreißt.

- Die Folie zeichnet sich bevorzugt durch eine brillante Optik aus. Dies betrifft die Trübung, insbesondere aber die Clarity der Folie. Die Folie besitzt bevorzugt eine Trübung von kleiner als 20 % und eine Clarity von größer als 80 %.

- Die Folie lässt sich wirtschaftlich herstellen

- Bei der Herstellung der Folie wird gewährleistet, dass das Eigenregenerat in einer Menge von bis zu 60 Gew.-% wieder der Extrusion zugeführt werden kann, ohne dass dabei die physikalischen, insbesondere aber die optischen Eigenschaften der Folie nennenswert negativ beeinflusst werden.

**Lösung der Aufgabe**

Gelöst wird die Aufgabe durch die Bereitstellung einer koextrudierten und transparenten, biaxial orientierten Polyesterfolie, enthaltend eine Basisschicht (B) und eine heißsiegelbare und peelfähige Deckschicht (A), wobei

a) der Polyester der Basisschicht (B) ein Copolyester ist, der aus mindestens 80 Mol-% an Einheiten aufgebaut ist, die auf eine aromatische Dicarbonsäure zurückgehen und auf der Diolseite auf Basis von aliphatischen Diolen aufgebaut ist, die 2-10 Mol-% Butandiol und 1-8 Mol-% Neopentylglykol enthalten, wobei die Summe der Molprozente der Dicarbonsäuren und Diole jeweils 100 % ergibt und der zu 100 Mol-% fehlende Anteil bei den Diolen Ethylenglykol ist, und
die heißsiegelbare und peelfähige Deckschicht (A)

b) zu mindestens 80 Gew.-% aus einem Copolyester aufgebaut ist, der aus 25 bis 95 Mol-% an Einheiten aufgebaut ist, die auf mindestens eine aromatische Dicarbonsäure und 5 bis 75 Mol-% an Einheiten, die auf mindestens eine aliphatische Dicarbonsäure zurückgehen, wobei die Summe der dicarbonsäureabgeleiteten Molprozente 100 ergibt; und

c) > 0 bis 10 Gew.-% anorganische und/oder organische Partikel mit einem mittleren Durchmesser $d_{50}$ von 2 bis 8 $\mu$m enthält.

Die Deckschicht (A) dieser Folie weist aufgrund der oben genannten Zusammensetzung zu einer Menüschale aus aPET ein "Cold-Peel" auf, das gemessen bei 4 °C, im Bereich von 3 bis 7 N/15 mm liegt (= medium Cold-Peel).
Die Folie wird demnach durch eine koextrudierte und biaxial orientierte, transparente, heißsiegelbare und peelfähige Polyesterfolie (AB) oder (ABC) gebildet. Sie ist damit zumindest zweischichtig aufgebaut. Sie besteht dann aus der Basisschicht (B) und der auf dieser aufgebrachten heißsiegelbaren Deckschicht (A).

**Kurze Beschreibung der Figuren**

Figur 1 zeigt eine Verpackung im Querschnitt mit (1) = Deckelfolie, (2) = Menüschale, (3) = Verpackungsgut, (4) = Kontamination (Fleischsaft)

Figur 2 zeigt die Prüfvorrichtung zur Messung des Abschälverhaltens mit (5) = aPET-Folie (= Menüschale), (6) = Folie, (7) = Deckschicht (A)

Figur 3 zeigt ein typisches Reiß/Dehnungsdiagramm von Peelfolien

Figur 4 zeigt das Handpeelgerät "PEEL CONTROL" und die Durchführung des Handpeeltests

**Definitionen und Vereinbarungen**

Unter einer Menüschale aus aPET wird eine zur Aufbewahrung von Lebensmitteln taugliche, geformte Folie verstanden, die aus amorphem Polyester gefertigt ist. Die amorphe Form wird üblicherweise durch das Herstellverfahren einer solchen aPET Folie bestimmt. Im Vergleich zu biaxial orientierten Folien - die eine Kristallinität aufweisen - wird hier auf einen Streck-und Fixierschritt verzichtet. Der Begriff aPET ist in der Industrie üblich für amorphe Polyesterfolien, deren Hauptbestandteil (aber nicht unbedingt ausschließlich) Polyester auf Basis von Polyethylenterephthalat (PET) ausmacht.

Unter einer Einstoffverpackung wird eine Verpackung verstanden, die aus möglichst wenigen-, und idealerweise nur einer einzigen, Rohstoffsorte hergestellt wurde. Einstoffverpackungen zeichnen sich durch eine gute Rezyklierfähigkeit aus, was aus Umweltschutzgründen zunehmend gefordert wird.

Im Sinne dieser Erfindung liegt eine Einstoffverpackung dann vor, wenn die erfindungsgemäße Folie als Deckelfolie zusammen mit einer Menüschale aus aPET zu einer Verpackung verarbeitet wird.

Mit heißsiegelbar wird die hier beschriebene Eigenschaft einer Polyesterfolie verstanden, die zumindest eine Basisschicht (B) und eine heißsiegelbare Deckschicht (A) enthält. Die heißsiegelbare Deckschicht (A) wird mittels Siegelbacken durch Anwendung von Wärme (100 bis 200 °C) und Druck (1 bis 6 bar) in einer bestimmten Zeit (0,1 bis 4 sec) mit einem Substrat, z.B. Menüschalen aus aPET, verbunden, ohne dass dabei die Basisschicht (B) plastisch wird. Das Polymer der Deckschicht (A) besitzt dazu einen deutlich niedrigeren Schmelzpunkt als das Polymer der Basisschicht. Wird für das Polymer der Basisschicht Polyethylenterephthalat mit einem Schmelzpunkt von 254 °C verwendet, so beträgt der Schmelzpunkt für das Polymer der Deckschicht (A) weniger als 200 °C, z.B. 180 °C.

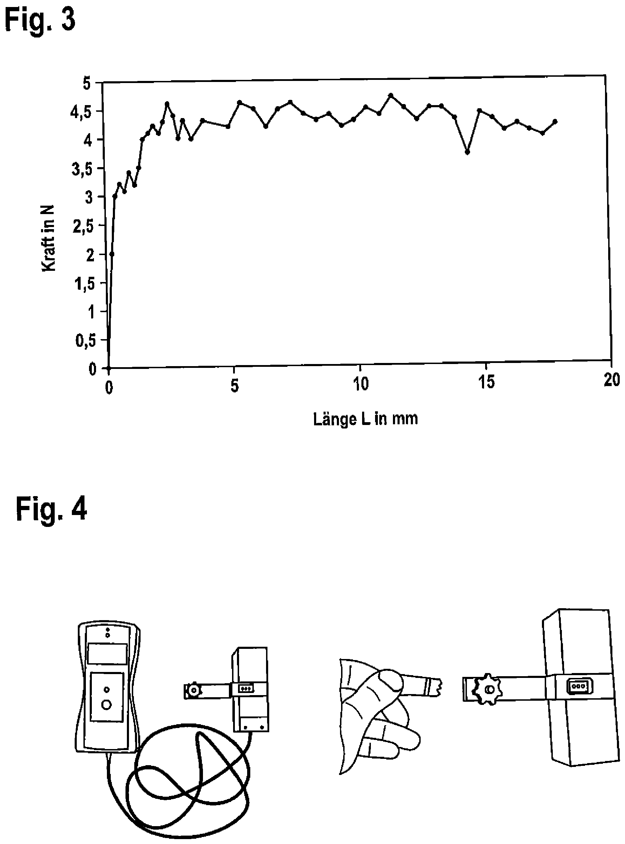

Eine heißsiegelbare Polyester-Folie ist peelfähig, wenn sie nach der Heißsiegelung von der Menüschale abgezogen werden kann, ohne dabei ein- oder weiterzureißen. Der Verbund aus Oberfolie und Menüschale geht beim Abziehen der Folie von der Menüschale i.A. in der Naht zwischen der Heißsiegelschicht und der Menüschalenoberfläche auf (vgl. Ahlhaus, O.E.: Verpackung mit Kunststoffen, Carl Hanser Verlag, S. 271, 1997, ISBN 3-446-17711-6). Beim Abziehen der auf einen Teststreifen der Menüschale heißgesiegelten Folie in einem Zug-Dehnungs-Prüfgerät entsprechend Figur 2 wird ein Abschälverhalten der Folie gemäß Figur 3 (180 °-Peel-Methode) erhalten. Bei Beginn des Abschälens der Folie von dem Substrat steigt die dazu erforderliche Kraft gemäß Figur 3 bis zu einem bestimmten Wert (z.B. 5 N/15mm) an und bleibt dann über den gesamtem Schälweg in etwa konstant, ist allerdings mit mehr oder weniger großen Schwankungen behaftet.

Unter "Cold-Peel" wird das Peel-Verhalten einer heißsiegelbaren und peelfähigen Polyesterfolie verstanden, welches sie nach Versiegelung und anschließender Lagerung in einer Kühlkammer bei Temperaturen von 2 bis 5 °C aufweist. Zum Testen dieser Eigenschaft wird nach dem Stand der Technik die Polyesterfolie auf eine Menüschale gesiegelt und die gesiegelte Packung in einer Kühlkammer für 1 h gelagert. Danach wird in der geschlossenen Kühlkammer die Folie von der Menüschale per Hand abgezogen. Sie muss hierbei komplett peelen, d.h. sie darf bei diesem Vorgang weder einreißen noch weiterreißen. Man unterscheidet hierbei zwischen "easy Peel" (ep), "medium Peel" (mp) und "strong Peel" (sp). Von dieser qualitativen Methode wird in der vorliegenden Erfindung kein Gebrauch gemacht, vielmehr wird eine quantitative Methode angewendet, die weiter unten näher beschrieben wird.

Im Vorstehenden wie im Folgenden bezieht sich Gew.-%, sofern nichts Anderes erwähnt, immer auf die Masse der jeweiligen Schicht oder das jeweilige System, in dessen Zusammenhang die Angabe genannt ist.

Zur Definition von Polymerzusammensetzungen wird auf Begriffe zurückgegriffen, die im Folgenden erläutert werden.

Generell kann ein Polyester ein Homopolyester oder ein Copolyester sein.

Unter Polyester ist ein Polymer zu verstehen, welches durch Polykondensation von Diolen und Dicarbonsäuren entstanden ist. Dabei ist es irrelevant, ob die Polykondensation direkt aus den Diol- bzw. Dicarbonsäure- Monomeren heraus stattfindet, oder aus geeigneten, industrieüblichen Derivaten, wie bspw. Dimethylterephthalt (DMT) als Derivat der Terephthalsäure (TPA).

Homopolyester sind solche Polyester, bei deren Herstellung genau eine Sorte Diol- sowie genau eine Sorte Dicarbonsäure verwendet wurden. Bspw. ist Polyethylenterephthalat (PET) ein Homopolyester, der ausschließlich Wiederholungseinheiten aufweist, die auf Ethylenglykol und Terephthalsäure zurückzuführen sind.

Copolyester sind solche Polyester, bei deren Herstellung mehr als eine Sorte Diol- und/oder mehr als eine Sorte Dicarbonsäure verwendet wurden. Um Copolyester genauer beschreiben zu können, bietet es sich an, die molare Zusammensetzung der Monomere anzugeben, wobei die Dicarbonsäurekomponenten von den Diolkomponenten getrennt betrachtet werden (Bezugsgrößen sind die Gesamtheit aller Dicarbonsäuren, sowie - getrennt davon - die Gesamtheit aller Diole im betreffenden Copolyester). Beispielsweise kann für einen Copolyester die Zusammensetzung der Dicarbonsäurekomponenten wie folgt lauten:

- 90 Mol-% Terephthalsäure

- 10 Mol-% Isophthalsäure

und die Zusammensetzung der Diolkomponenten wie folgt lauten:

- 100 Mol-% Ethandiol

wobei sich alle vorkommenden Dicarbonsäurekomponenten auf 100 Mol-% summieren, und alle vorkommenden Diolkomponenten auf 100 Mol-% summieren.

Alternativ sind auch Angaben zur molaren Zusammensetzung üblich, bei der die Gesamtheit aller Wiederholungseinheiten aus Alkylendicarboxylat im betreffenden Copolyester als Bezugsgröße gewählt wird. Obige Zusammensetzung ließe sich bspw. dann ausdrücken als

- 90 Mol-% Ethylenterephthalat

- 10 Mol-% Ethylenisophthalat

wobei sich alle im Molekül vorkommenden Wiederholungseinheiten auf 100 Mol-% summieren.

Im Rahmen dieser Erfindung hat sich gezeigt, dass die Verwendung bestimmter Copolyester in bestimmten Schichten einer Polyesterfolie vorteilhaft ist. Diese Copolyester werden im Beschreibungstext offenbart, und können so (wie definiert) als einziger Copolyester in der betreffenden Folienschicht verwendet werden. Weiterhin ist es möglich, Mischungen aus verschiedenen Polyestern zu verwenden, die über die Gesamtmischung aller Polyester der betreffenden Schicht betrachtet eine zu den beschriebenen Copolyestern äquivalente Monomerzusammensetzung aufweisen.

Die Begriffe "Packung" und "Verpackung" sind synonym und werden im Vorstehenden und Folgenden wechselweise bei gleicher Bedeutung verwendet.

## Siegelfähige Polyesterfolie

Die Folie nach der vorliegenden Erfindung ist eine transparente, koextrudierte, biaxial orientierte, heißsiegelbare und peelfähige Polyesterfolie, die aus Schichten (AB) oder (ABC) aufgebaut ist. Die heißsiegelbare und peelfähige Deckschicht (A) ist überwiegend, d.h. zu mindestens 80 Gew.-%, aus Polyester aufgebaut.

## Basisschicht (B)

### *Polyester für die Basisschicht (B)*

Die Basisschicht (B) der erfindungsgemäßen Folie besteht zu mindestens 90 Gew.-% aus einem thermoplastischen Polyester, der aus Dicarbonsäure- und aus Diol-abgeleiteten Einheiten aufgebaut ist.

Erfindungsgemäß umfasst die Basisschicht (B) einen Polyester, der zu mindestens 80 Mol-% aus Einheiten aufgebaut ist, die auf eine aromatische Dicarbonsäure zurückgehen und auf Basis von aliphatischen Diolen, die zumindest 2 Mol-% Butandiol und zumindest 1 Mol-% Neopentylglykol umfassen, wobei die Summe der Molprozente der Dicarbonsäuren und Diole jeweils 100 % ergibt.

In der bevorzugten Ausfülirungsform besteht der Polyester aus den folgenden Dicarboxylaten und Alkylenen, jeweils bezogen auf die Gesamtdicarboxylat- bzw. Gesamtalkylenmenge

- 80 bis 100 Mol-%, bevorzugt 85 bis 100 Mol-% und besonders bevorzugt 90 bis 100 Mol-% Terephthalat

- 0 bis 20 Mol-%, bevorzugt 0 bis 15 Mol-% und besonders bevorzugt 0 bis 10 Mol-% Isophthalat

- 2 bis 10 Mol-%, bevorzugt 3 bis 9 Mol-% und besonders bevorzugt 4 bis 8 Mol-% Butandioleinheiten

- 1 bis 8 Mol-%, bevorzugt 1,5 bis 7 Mol-% und besonders bevorzugt 2 bis 6 Mol-% Neopentylglykol

- 82 bis 97 Mol-%, bevorzugt 84 bis 95,5 Mol-% und besonders bevorzugt 86 bis 94 Mol-% EG (1,2-Ethandiol)

wobei sich die Molprozente der angeführten Dicarbonsäuren und Diole immer zu 100 % ergänzen.

Daneben kann der Polyester für die Basisschicht (B) aus Mischungen von Polyestern (z.B. aus zwei Polyestern, Polyester I und Polyester II) aufgebaut sein, die als Mischung betrachtet eine zu den oben aufgeführten Copolyestern äquivalente Monomerzusammensetzung aufweisen. Die daraus resultierende Mischung wird dann dem Extruder für diese Schicht zudosiert.

## Deckschicht (A)

### *Polyester für die Deckschicht (A)*

Erfindungsgemäß umfasst die heißsiegelbare und peelfähige Deckschicht (A) einen Copolyester und optional Partikel. Der Copolyester ist aufgebaut aus Einheiten, die von aromatischen und aliphatischen Dicarbonsäuren abgeleitet sind. Die auf die aromatischen Dicarbonsäuren zurückgehenden Einheiten sind in dem Copolyester in einer Menge von 25 bis 95 Mol-%, bevorzugt 40 bis 90 Mol-%, besonders bevorzugt 50 bis 88 Mol-% enthalten. Die auf die aliphatischen Dicarbonsäuren zurückgehenden Einheiten sind in dem Polyester in einer Menge von 5 bis 75 Mol-%, bevorzugt 10 bis 60 Mol-%, besonders bevorzugt 12 bis 50 Mol-% enthalten, wobei die Mol-%-Angaben sich immer zu 100 % ergänzen.

Beispiele für die erfindungsgemäß einsetzbaren aromatischen Dicarbonsäuren sind die Terephthalsäure, die Isophthalsäure und die 2,6 Naphthalindicarbonsäure.

Beispiele für aliphatische Dicarbonsäuren sind die Adipinsäure, die Pimelinsäure, die Korksäure, die Azelainsäure und die Sebazinsäure. Erfindungsgemäß bevorzugt einsetzbar sind die Azelainsäure und die Sebazinsäure, insbesondere bevorzugt die Sebazinsäure.

Beispiele für erfindungsgemäß einsetzbare Diole sind aliphatische Diole wie Ethylenglykol, 1,3-Propandiol, 1,4-Butandiol, 1,5-Pentandiol, Diethylenglykol, Triethylenglykol, 1,4-Cyclohexandimethanol und Neopentylglykol.

In der bevorzugten Ausführungsform besteht der Copolyester aus den folgenden Dicarboxylaten und Alkylenen, jeweils bezogen auf die Gesamtdicarboxylat- bzw. Gesamtalkylenmenge

- 25 bis 95 Mol-%, bevorzugt 30 bis 90 Mol-% und besonders bevorzugt 40 bis 70 Mol-% Terephthalat

- 0 bis 25 Mol-%, bevorzugt 5 bis 20 Mol-% und besonders bevorzugt 10 bis 20 Mol-% Isophthalat

- 5 bis 75 Mol-%, bevorzugt 8 bis 70 Mol-% und besonders bevorzugt 11 bis 65 Mol-% Sebazat

- 0 bis 50 Mol-%, bevorzugt 0 bis 40 Mol-% und besonders bevorzugt 0 bis 30 Mol-% Azelat

- mehr als 50 Mol-%, bevorzugt mehr als 60 Mol-% und besonders bevorzugt mehr als 70 Mol-% Ethylen.

Daneben kann der Polyester für die Deckschicht (A) aus Mischungen von Polyestern (z.B. aus zwei Polyestern, Polyester I und Polyester II) aufgebaut sein, die als Mischung betrachtet eine zu den oben aufgeführten Copolyestern äquivalente Monomerzusammensetzung aufweisen. Die daraus resultierende Mischung wird dann dem Extruder für diese Schicht zudosiert.

### *Partikel in der Deckschicht (A)*

Zur Verbesserung der Verarbeitbarkeit der Folie hat es sich als günstig erwiesen, die Deckschicht (A) zu modifizieren. Dies geschieht am besten mit Hilfe von geeigneten Partikeln, die dem Polyester in bestimmten Mengen zugegeben werden.

Für eine gute Verarbeitbarkeit der Folie hat es sich als vorteilhaft erwiesen, Partikel mit einem mittleren Parti-keldurchmesser $d_{50}$ von 2 bis 8 $\mu$m, bevorzugt von 2,5 bis 7,5 $\mu$m und besonders bevorzugt von 3 bis 7 $\mu$m zu verwenden. Bei der Verwendung von Partikeln mit einem Durchmesser von unterhalb 2 $\mu$m ist ein positiver Einfluss der Partikel auf das Verarbeitungsverhalten der Folie nicht mehr gegeben. Die Folie neigt zum Verblocken, was unerwünscht ist. Partikel mit einem Durchmesser von größer als 8 $\mu$m verursachen in der Regel eine zu hohe Trübung.

Dabei hat es sich als günstig erwiesen, wenn die heißsiegelbare und peelfähige Deckschicht (A) Partikel in einer Konzentration von > 0 bis 10 Gew.-% enthält. Bevorzugt beträgt die Konzentration der Partikel 0,7 bis 8,0 Gew.-% und besonders bevorzugt 1,0 bis 6,0 Gew.-%. Enthält die Deckschicht (A) der Folie dagegen keine Partikel, so verringert sich der positive Einfluss auf das Abziehverhalten der Folie von der Menüschale. Enthält die Deckschicht (A) der Folie mehr als 10 Gew.-% Partikel, so besteht die Gefahr, dass die Trübung der Folie zu groß wird.

Erfindungsgemäß bevorzugte Partikel sind synthetisch hergestellte, amorphe $SiO_2$-Partikel in kolloidaler Form, die hervorragend in die Polymermatrix eingebunden werden. Zur Herstellung der $SiO_2$-Partikel wird auf den Stand der Technik verwiesen; das Verfahren ist z.B. in der EP 1 475 228 B1 ausführlich offenbart.

### *Anti PET-Polymer in der Deckschicht (A)*

Optional enthält die Deckschicht (A) ein mit Polyester unverträgliches Polymer (anti-PET-Polymer). Der Anteil des anti-PET-Polymers beträgt dann 2 bis 20 Gew.-%, bezogen auf die Masse der Deckschicht (A). In einer bevorzugten Ausführungsform beträgt der Anteil des anti-PET-Polymers 4 bis 20 Gew.-% und in der besonders bevorzugten Ausführungsform beträgt er 6 bis 20 Gew.-%.

Beispiele für geeignete anti-PET-Polymere sind Polymere auf Basis von Ethylen, Propylen, Cycloolefinen, Amiden oder Styrol. In einer bevorzugten Ausführungsform wird als anti-PET-Polymeres ein Copolymeres verwendet. Beispiele hierfür sind Copolymere auf Basis von Ethylen, Propylen oder auf Basis von Cycloolefinen (Norbornen/Ethylen-, Tetracyclododecen/Ethylen-Copolymere). In der besonders bevorzugten Ausführungsformen ist das mit Polyester unverträgliche Polymer ein Cycloolefincopolymer (COC). Solche Cycloolefincopolymere sind beispielsweise in der EP-A 1 068 949 oder in der JP 05-009319 beschrieben, auf die hier Bezug genommen wird.

Unter den COCs sind insbesondere diejenigen bevorzugt, die polymerisierte Einheiten polycyclischer Olefine mit Norbornengrundstruktur, besonders bevorzugt Norbornen oder Tetracyclododecen, enthalten. Besonders bevorzugt sind Cycloolefincopolymere, die polymerisierte Einheiten acyclischer Olefine, insbesondere Ethylen, enthalten. Ganz besonders bevorzugt sind Norbonen/Ethylen- und Tetracyclododecen/Ethylen-Copolymere, welche 5 bis 80 Gew.-% Ethylen-Einheiten, vorzugsweise 10 bis 60 Gew.-% Ethylen-Einheiten enthalten (bezogen auf die Masse des Copolymeren).

Die COCs weisen im Allgemeinen Glasübergangstemperaturen zwischen -20 und 400 °C auf. Für die Erfindung sind solche COCs geeignet, die eine Glasübergangstemperatur von kleiner als 120 °C, bevorzugt kleiner als 100 °C und besonders bevorzugt kleiner als 80 °C aufweisen. Vorzugsweise sollte die Glasübergangstemperatur oberhalb von 50 °C liegen, bevorzugt oberhalb von 55 °C, insbesondere oberhalb von 60 °C.

Folien, die ein COC mit einer Glasübergangstemperatur von kleiner als 100 °C enthalten, zeichnen sich gegenüber solche, die ein COC mit einer Glasübergangstemperatur von größer 100° C enthalten, durch eine niedrigere Trübung und durch eine verbesserte Siegelbarkeit aus.

Die EP-A-0 283 164, EP-A-0 407 870, EP-A-0 485 893 und EP-A-0 503 422 beschreiben die Herstellung von COC's mit Katalysatoren, basierend auf löslichen Metallocenkomplexen. Auf Cycloolefincopolymere, hergestellt mit Katalysatoren, die auf löslichen Metallocenkomplexen basieren, wird besonders bevorzugt zurückgegriffen. Solche COC sind käuflich erhältlich; z.B. Topas® (Ticona, Frankfurt).

Die Zugabe des anti-PET-Polymers begünstigt die Siegelung und das Verarbeitungsverhalten, insbesondere die Wicklung der Folie. Beträgt der Anteil des COC's weniger als 2 Gew.-%, so ist ein positiver Einfluss des Polymeren auf die Siegelung, das Peelverhalten und die Herstellbarkeit der Folie nicht mehr gegeben. Die Folie neigt zum Verblocken. Andererseits sollte der Anteil von dem anti-PET-Polymers 20 Gew.-% nicht überschreiten, da die Trübung der Folie sonst zu hoch wird und der wirtschaftliche Einsatz von 60 % Eigenregenerat nicht mehr möglich ist.

### Dicke der Deckschicht (A)

Erfindungsgemäß weist die Deckschicht (A) eine Dicke von 1,5 bis 5 µm auf. Ist die Dicke der Deckschicht (A) geringer als 1,5 µm, so ist die Siegelung der Folie zur Menüschale nicht ausreichend. Ist die Deckschichtdicke größer als 5 µm, so wird die Siegelung zu fest, was unerwünscht ist.

Die erfindungsgemäße Folie zeigt aufgrund der Zusammensetzung der Schichten der Folie gute Siegel- und Peeleigenschaften zur Menüschale. Nach der Heißversiegelung der Folie mit der aPET-Menüschale bei 160 °C (460 N, 2 s) ist die Peelbarkeit von der Folie zur aPET-Menüschale größer als 3 N/15 mm und beträgt max. 7 N/15 mm. In allen Fällen (sowohl bei Raumtemperatur als auch in kalter Umgebung bei 4 °C) wird dabei eine peelfähige Siegelung erzielt. Die "Cold-Peel" Eigenschaften der gesiegelten Folie mit der aPET-Menüschale sind hervorragend. Es wird ein "medium Peel" bei einer Prüftemperatur von 4 °C erzielt.

### Aufbau der erfindungsgemäßen Folie

Die erfindungsgemäße Folie kann zwei- oder dreischichtig aufgebaut sein. Zur Erzielung der vorgenannten Eigenschaften, insbesondere der geforderten guten optischen Eigenschaften, hat sich ein dreischichtiger Aufbau der Folie mit den Schichten (ABC) als günstig erwiesen. Die Folie umfasst dann die Basisschicht (B), die heißsiegelbare und peelfähige Deckschicht (A) auf der einen Seite der Basisschicht (B) und die Deckschicht (C) auf der anderen Seite der Basisschicht (B). Die Deckschicht (C) entspricht von der Rezeptur her der Basisschicht (B), muss aber nicht zwingend mit dieser identisch sein.

### Dicke der erfindungsgemäßen Folie

Die Gesamtdicke der erfindungsgemäßen Folie kann innerhalb bestimmter Grenzen variieren. Sie beträgt 10 bis 125 µm, bevorzugt 15 bis 120 µm und besonders bevorzugt 20 bis 115 µm.

Ist die Dicke der Folie geringer als 10 µm, so sind die mechanischen Eigenschaften der Folie nicht mehr ausreichend. Ist die Dicke der Folie dagegen größer als 125 µm, so verlängert sich die Zeit zur Versiegelung der Verpackung, was unerwünscht ist.

### *Verfahren zur Herstellung der der erfindungsgemäßen Folie*

Die Erfindung betrifft daneben ein Verfahren zur Herstellung der erfindungsgemäßen Polyesterfolie. Im Rahmen dieses Verfahrens wird so vorgegangen, dass die den einzelnen Schichten (AB und gegebenenfalls C) der erfindungsgemäßen Folie entsprechenden Schmelzen durch eine Flachdüse koextrudiert werden, die so erhaltene Folie zur Verfestigung auf einer oder mehreren Walzen abgezogen wird, die Folie anschließend biaxial gestreckt und die biaxial gestreckte Folie thermofixiert und aufgerollt wird.

Die biaxiale Verstreckung wird sequenziell durchgeführt. Dabei wird vorzugsweise erst in Längsrichtung (in Maschinenrichtung) und anschließend in Querrichtung (senkrecht zur Maschinenrichtung) verstreckt. Das Verstrecken in Längsrichtung lässt sich mit Hilfe mehrerer entsprechend dem angestrebten Streckverhältnis verschieden schnell laufenden Walzen durchführen. Zum Querverstrecken benutzt man allgemein einen Kluppenrahmen.

Zunächst werden die Polymere, bzw. die Polymermischungen, für die einzelnen Schichten in jeweiligen Extrudern verflüssigt, wobei die gegebenenfalls als Zusätze vorgesehenen Additive bereits im Polymer bzw. in der Polymermischung enthalten sein können. Die Schmelzen werden gleichzeitig durch eine Breitschlitzdüse gepresst, und die ausgepresste mehrschichtige Schmelze wird auf einer oder mehreren Abzugswalzen abgezogen, wobei die Schmelze abkühlt und sich zu einer Vorfolie verfestigt.

Die Temperaturen, bei der die Streckungen durchgeführt werden, können in einem großen Bereich variieren und richten sich nach den gewünschten Eigenschaften der Folie. Im Allgemeinen wird die Längsstreckung bei einer Temperatur im Bereich von 80 bis 130 °C und die Querstreckung bei einer Temperatur im Bereich von 90 bis 150 °C durchgeführt. Das Längsstreckverhältnis liegt allgemein im Bereich von 2,5:1 bis 6:1. Das Querstreckverhältnis liegt allgemein im Bereich von 3,0:1 bis 5,0:1.

Bei der nachfolgenden Thermofixierung wird die Folie über eine Zeitdauer von etwa 0,1 bis 10 s bei einer Temperatur von 180 bis 240 °C gehalten. Anschließend wird die Folie in üblicher Weise aufgewickelt.

### Erfindungsgemäße Eigenschaften

Die erfindungsgemäße Folie, hergestellt nach den erfindungsgemäßen Verfahren, besitzt eine Reihe von Eigenschaften, von denen untenstehend die wichtigsten aufgeführt sind.

Die erfindungsgemäße Folie zeigt das geforderte sehr gute Cold-Peel-Verhalten. Bei einer Versiegelung der Folie als Deckelfolie mit einer aPET Menüschale in kalter Umgebung von 4 °C (Siegelbedingungen 160 °C, 460 N, 2 s) wird stets ein "medium Cold-Peel" erreicht.

Die optischen Eigenschaften der Polyesterfolie sind sehr gut. Die Trübung der Folie beträgt weniger als 20 % und die Clarity der Folie ist größer als 80 %.

Die erfindungsgemäße Folie eignet sich hervorragend zum Verpacken von Nahrungs- und Genussmitteln, insbesondere zur Verpackung von Nahrungs- und Genussmitteln in aPET-Menüschalen, bei denen heißsiegelbare Polyesterfolien zum Verschließen der Verpackung verwendet werden.

Die Tabelle 1 fasst die bevorzugten Folieneigenschaften zusammen.

*Tabelle 1*

| Basisschicht (B) | Bevorzugter Bereich | Besonders Bevorzugt | Ganz Besonders Bevorzugt | Einheit | Messmethode | |
|---|---|---|---|---|---|---|
| | | | | | | |
| Partikeldurchmesser $d_{50}$ | 2 bis 8 | 2,5 bis 7,5 | 3,0 bis 7 | $\mu$m | intern | |
| Partikelkonzentration | bis 0,5 | 0,01 bis 0,4 | 0,01 bis 0,35 | Gew.-% | intern | |

(fortgesetzt)

| Deckschicht (A) | | | | | |
|---|---|---|---|---|---|
| Anteil Einheiten im Polyester, aufgebaut auf aromatischen Dicarbonsäuren | 25 bis 95 | 40 bis 95 | 50 bis 95 | Mol-% | |
| Anteil Einheiten im Polyester, aufgebaut auf aliphatischen Dicarbonsäuren | 5 bis 75 | 5 bis 60 | 5 bis 50 | Mol-% | |
| Anti-PET-Polymer | 2 bis 20 | 4 bis 20 | 6 bis 20 | Gew.-% | |
| Partikeldurchmesser $d_{50}$ | 2 bis 8 | 2,5 bis 7,5 | 3,0 bis 7 | μm | intern |
| Partikelkonzentration | > 0 bis 10 | 0,7 bis 8 | 1,0 bis 6 | Gew.-% | intern |
| Dicke der Deckschicht (A) | 1,5 bis 5 | | | μm | intern |
| **Eigenschaften der Folie** | | | | | |
| Trübung der Folie | < 20 | < 18 | < 16 | % | ASTM D 1003-52 |
| Clarity der Folie | > 80 | >82 | >84 | % | ASTM D 1003-51 |
| Dicke der Folie | 10 bis 125 | 15 bis 120 | 20 bis 115 | μm | |
| Eigenschaften der Verpackung | | | | | |
| Cold Peel-Verhalten, Messung bei 4 °C | medium peel | medium peel | medium peel | | intern |
| | 3 bis 7 | 4 bis 7 | 5 bis 7 | N/15 mm | |

**Messmethoden**

**"Cold-Peel"**

Die heißsiegelbare und peelfähige erfindungsgemäße Polyesterfolie wird auf die aPET-Menüschale gesiegelt und die gesiegelte Packung für 1 h in einer auf 4 °C temperierten Kühlkammer gelagert. Die gesiegelte Packung wird in der geschlossenen Kühlkammer mit dem Handpeelgerät "PEEL CONTROL" der Fa. PITSID (Polygraphische innovative Technik Leipzig GmbH, Leipzig, Deutschland), Figur 4, getestet. Die Arbeitsweise mit dem Gerät ist ähnlich zu derjenigen mit dem Zug-Dehnungs-Prüfgerät, die Proben werden jedoch mit der Hand auseinandergezogen.

Die Messung erfolgt nach der folgenden internen Prüfvorschrift: Von den gesiegelten Proben werden 15 mm breite Teststreifen vom Siegelrand der Menüschale und der darauf heißgesiegelten Folie (quer oder aber auch längs zum Randverlauf) geschnitten. Der freie Folienabschnitt wird in das Handpeelgerät eingeklemmt und zwischen Folienabschnitt und Siegelrand der Menüschale wird mittels Hand ein Schälwinkel von 180 ° eingestellt. Mit der einen Hand wird der freie Folienabschnitt festgehalten und mit der anderen Hand so an dem Gerät gezogen, dass die beiden Folien geschält werden. Es wird ein Messschrieb entsprechend Figur 3 erhalten. Messwert ist die maximale Peelkraft $F_{max}$, die notiert wird. Bei diesem Vorgang muss die Probe komplett peelen, d.h. sie darf weder einreißen noch weitereißen.

Dieser Vorgang wird 5mal wiederholt und ein entsprechender arithmetischer Mittelwert $\overline{F_{max}}$ gebildet. Eine Beurteilung des "Cold-Peel" erfolgt mit Hilfe der folgenden Tabelle.

| Leichte Peelbarkeit (easy Peel) | Peelkraft im Bereich von ungefähr 2 bis 3 N je 15 mm Streifenbreite |
|---|---|

(fortgesetzt)

| Widerstandsfähige Peelbarkeit (medium Peel) | Peelkraft im Bereich von ungefähr 3 bis 7 N je 15 mm Streifenbreite |
|---|---|
| Starke, widerstandsfähige Peelbarkeit (strong Peel) | Peelkraft im Bereich von mehr als 7 N je 15 mm Streifenbreite |

**Trübung und Clarity**

Die Messung an den Polyesterfolien erfolgt am Hazegard Hazemeter XL-211 der Fa. BYK Gardner. Die Trübung nach Hölz wird nach ASTM-D 1003-61, Methode A, bestimmt. Die Messung der Clarity geschieht nach ASTM-D 1003 mittels Hazegard, jedoch jetzt am "clarity port" des Messgerätes. Die Messungen werden sämtlich direkt nach Herstellung der Folie durchgeführt.

Im Folgenden wird die Erfindung anhand von Beispielen näher erläutert.

**Beispiel 1**

Zur Herstellung der heißsiegelbaren und peelfähigen Folie wurden für die einzelnen koextrudierten Schichten (ABC) die folgenden Ausgangsmaterialien verwendet

**Deckschicht A**

| | |
|---|---|
| 40 Gew.-% | Polyester I (Copolyester aus 78 Mol-% Ethylenterephthalat, 22 Mol-% Ethylenisophthalat) mit einem SV-Wert von 850. Polyester I enthält desweiteren 5,0 Gew.-% ®Sylysia 430 (synthetisches $SiO_2$, Fuji, Japan) mit einem Partikeldurchmesser von $d_{50}$ = 3,4 $\mu$m. |
| 56 Gew.-% | Polyester II (Copolyester enthaltend 40 Mol-% Ethylensebazat, 60 Mol-% Ethylentherephthalat,) mit einem SV-Wert von 1000. |
| 4 Gew.-% | antiPET-Polymer (COC, ®Topas 8007, Fa. Ticona, $T_G$ von 75°C). |

**Basisschicht B**

| | |
|---|---|
| 92 Gew.-% | Polyester I (Polyethylenterephthalat mit einem SV-Wert von 800) |
| 8 Gew.-% | Polyester II (Copolyester enthaltend 100 Mol-% Terephthalat, 60 Mol-% Butandiol, 35 Mol-% Neopentylglykol, Rest EG (1,2-Ethandiol)) mit einem SV-Wert von 1000. |

**Deckschicht C**

| | |
|---|---|
| 95 Gew.-% | Polyethylenterephthalat |
| 5 Gew.-% | Mischung aus 98,5 Gew.-% Polyethylenterephthalat und 1,5 Gew.-% Sylobloc 46, (synthetisches $SiO_2$ von der Fa. Grace, Deutschland) mit einem Partikeldurchmesser von $d_{50}$ = 3,9 $\mu$m. |

Die o.g. Rohstoffe wurden in je einem Extruder pro Schicht aufgeschmolzen und durch eine dreischichtige Breitschlitzdüse mit dem Aufbau ABC auf eine gekühlte Abzugswalze extrudiert. Die so erhaltene amorphe Vorfolie wurde längsverstreckt. Danach wurde die Folie quergestreckt, fixiert und aufgerollt (Enddicke der Folie 25 $\mu$m). Die Herstellungsbedingungen in den einzelnen Verfahrensschritten waren

| Extrusion | Temperaturen für die Schmelzen (ABC) | 270 | °C |
|---|---|---|---|
| | Temperatur der Abzugswalze | 20 | °C |
| Längsstreckung | Aufheiztemperatur der Walzen<br>Strecktemperatur | 80-120<br>115 | °C<br>°C |
| | Längsstreckverhältnis | 3,5 | |
| Querstreckung | Temperatur der Aufheizfelder | 80-135 | °C |
| | Strecktemperatur | 130 | °C |
| | Querstreckverhältnis | 4,2 | |
| Fixierung | Temperatur | 230 | °C |
| | Dauer | 3 | s |

In der Tabelle 2 sind die Zusammensetzung der Folie, sowie weitere Informationen zur erfindungsgemäßen Folie dargestellt.

**Herstellung der Verpackung**

Die Verpackung wurde in einer Umgebung von 4 °C hergestellt. Dazu wurden eine 400 $\mu$m Polyesterfolie aus aPET und die erfindungsgemäße heißsiegelbare und peelfähige Folie jeweils für sich in eine Multivac-Maschine (R 245/SN: 166619; MULTIVAC Deutschland GmbH & Co. KG, Wolfertschwenden, Deutschland) eingespannt. Die thermoformbare aPET-Folie wurde unter den Formbedingungen (Formtemperaturen 150 °C, Zeit Anheizen: 2 - 3 s, Explosionsverformung / Druckluftspeicher 2 bar, Formdruck 2 bar, Formen 2 s) tiefgezogen. Der Tiefzug betrug 50 mm.

In den Hohlraum der thermogeformten Polyesterfolie aus aPET wurden Portionen von Schweinefleisch gelegt und danach die erfindungsgemäße Folie (= Deckelfolie) in Kontakt mit der Oberseite der Menüschale gebracht. Dabei wurde die erfindungsgemäße Folie so auf die Menüschale gelegt, dass die heißsiegelbare Oberfläche (A) der erfindungsgemäßen Folie in Kontakt mit der Portion Fleisch und einer Oberfläche der aPET-Menüschale war. Die Heißversiegelung der Packung wurde in der Maschine bei einer Siegelbackentemperatur von 160 °C, 2 s und bei einem Druck von 2 bar durchgeführt. Die Siegelung war fest und dauerhaft.

Das "Cold-Peel" -Verhalten der Deckelfolie wurde entsprechend der oben beschriebenen Methode geprüft. Die Peelkraft zum Öffnen der Packung betrug 4,2 N/15 mm und entspricht damit dem gewünschten "Medium Cold-Peel".

**Beispiel 2**

Im Vergleich zu Beispiel 1 wurde die Schichtdicke der heißsiegelbaren Deckschicht (A) der erfindungsgemäßen Polyesterfolie von 1,0 auf 2,0 $\mu$m bei sonst identischem Folienaufbau und identischer Herstellungsweise angehoben. Für alle Siegeltemperaturen wurden peelfähige Folien erhalten, die sich durch ein "Medium Cold-Peel" auszeichnen.

**Beispiel 3**

Im Vergleich zu Beispiel 1 wurde bei sonst identischem Folienaufbau die Zusammensetzung der Mischung für die heißsiegelbare Deckschicht (A) geändert. Die Zusammensetzung von Polyester I und II blieb im Vergleich zu Beispiel 1 unverändert. Die Mischung besteht jetzt aus den folgenden Rohstoffanteilen

- Polyester I    40 Gew.-%,
- Polyester II   50 Gew.-% und
- AntiPET        10 Gew.-%.

Für alle Siegeltemperaturen zeigte sich das gewünschte Abschälen der Folien von der Menüschale gemäß Figur 2. Das "Cold-Peel-Verhalten " der Folie ist ok.

**Beispiel 4**

Im Vergleich zu Beispiel 3 wurde bei sonst identischem Folienaufbau die Zusammensetzung von Poyester II für die siegelfähige Deckschicht (A) geändert. Die verwendete Mischung in Deckschicht (A) besteht jetzt aus folgenden Rohstoffanteilen:

| | |
|---|---|
| 30 Gew.-% | Polyester I, Zusammensetzung identisch zu Beispiel 1 |
| 60 Gew.-% | Polyester II, ®Vitel1912, (Polyester, Bostik-Findley, USA; enthält die Dicarbonsäure-Bestandteile Azelainsäure, Sebazinsäure, Terephthalsäure, Isophthalsäure und weitere Dicarbonsäuren etwa im Molverhältnis 40/1/45/10/4 und als Diolkomponente mindestens 60 Mol-% Ethylenglykol). Die Glasübergangstemperatur von Polyester II beträgt ca. -1°C. |
| 10 Gew.-% | COC (®Topas 8007) |

Für alle Siegeltemperaturen zeigte sich das gewünschte Abschälen der Folien von der Menüschale gemäß Figur 2. Die Peelbarkeit der erfindungsgemäßen Folien sind etwas höher als im Beipiel 1. Sie liegen in einem mittleren Bereich, so dass sich die Folie ohne hohe Kraftanstrengung von der Menüschale abziehen lässt.

**Vergleichsbeispiel 1**

Es wurde das Beispiel 1 aus der EP 1 475 228 B1 nachgearbeitet. In Tabelle 3 sind die Eigenschaften der Folie dargestellt. Es wurde für keine der angegebenen Siegeltemperaturen eine Folie erhalten, die ein "Medium-Cold-Peel" zeigt.

**Vergleichsbeispiel 2**

Im Vergleich zu Beispiel 1 wurde die Zusammensetzung der Deckschicht (A) geändert. In der Deckschicht (A) wurde nur der auf Basis von aromatischen Säuren aufgebaute Polyester I verwendet

| | |
|---|---|
| 100,0 Gew.-% | Polyester I (= Copolyester aus 78 Mol-% Ethylenterephthalat und 22 Mol-% Ethylenisophthalat) mit einem SV-Wert von 850. Polyester I enthält darüber hinaus 2,0 % ®Sylysia 430 (synthetisches $SiO_2$, Fuji, Japan) mit einem Partikeldurchmesser von $d_{50}$ = 3,4 $\mu$m. |

In Tabelle 3 sind die Eigenschaften der Folie dargestellt. Es wurde für keine der angegebenen Siegeltemperaturen eine peelfähige Folie erhalten.

**Vergleichsbeispiel 3**

Es wurde das Beispiel 1 aus der EP-A 0 379 190 nachgearbeitet. Es wurde für keine der angegebenen Siegeltemperaturen eine peelfähige Folie erhalten. Die Folie zeigt "weldable" Verhalten und ist damit für die Lösung der genannten Aufgabe ungeeignet.

**Tabelle 2**

| | | Basisschcht (B) | | | | | | | | Deckschicht (A) | | | | | | | | | | | | | | | | |
|---|---|---|---|---|---|---|---|---|---|---|---|---|---|---|---|---|---|---|---|---|---|---|---|---|---|---|
| | | Zusammensetzung Polyester I | | | Zusammensetzung Polyester II | | | | Verhältnisse PI/PII | Zusammensetzung Polyester I | | | Zusammensetzung Polyester II | | | | | | | | Verhältnisse PI/PII/ AntiPET-Polymer | Folien-aufbau | Deckschicht-Dicke | Antiblockmittel | | Folien-dicke |
| | | | | | | | | | | | | | | | | | | | | | | | | (A) | Durchmesser | Konzen-tration | |
| | | TS | IS | EG | TS | BT | NPG | WS | | TS | IS | EG | SeS | AzS | AdS | TS | IS | EG | BD | WS | | | | μm | μm | Gew.-% | μm |
| | | Mol-% | | | | | | | | Mol-% | | | | | | | | | | | | | | | | | |
| Beispiele | 1 | 100 | | 100 | 100 | 60 | 35 | 5 | 92/8 | 78 | 22 | 100 | 40 | | | 60 | | 100 | | | 40/56/4 | ABC | 1 | 3,4 | 2,00 | 25 |
| | 2 | 100 | | 100 | 100 | 60 | 35 | 5 | 92/8 | 78 | 22 | 100 | 40 | | | 60 | | 100 | | | 40/56/4 | ABC | 2 | 3,4 | 2,00 | 25 |
| | 3 | 100 | | 100 | 100 | 60 | 35 | 5 | 92/8 | 78 | 22 | 100 | 40 | | | 60 | | 100 | | | 40/50/10 | ABC | 1 | 3,4 | 2,00 | 25 |
| | 4 | 100 | | 100 | 100 | 60 | 35 | 5 | 92/8 | 78 | 22 | 100 | 1 | 40 | 45 | 10 | | > 60 | | 4 | 30/60/10 | ABC | 1 | 3,4 | 1,50 | 25 |
| V-B | 1 | 100 | | 100 | | | | | | 78 | 22 | 100 | | 40 | 10 | 50 | | 100 | | | 40/40/20 | ABC | 1 | 3,4 | 2,00 | 25 |
| | 2 | 100 | | 100 | | | | | | 78 | 22 | 100 | | | | | | | | | 100/0/0 | ABC | 1 | 3,4 | 2,00 | 25 |
| | 3 | 100 | | 100 | | | | | | | | | 10 | | | 90 | | 100 | | | 0/100/0 | AB | 4,1 | | | 13,1 |

TS Terephthalat, IS Isophthalat, EG Ethylen, BD Butan, NG Neopentyl
AzS Azelat, SeS Sebazat, AdS Adipat, WS weitere Dicarbonsäuren und Glykole

**Tabelle 3**

| | | Cold-Peel der Packung bei 4 °C gemessen | Trübung der Deckelfolie | Clarity der Deckelfolie |
|---|---|---|---|---|
| | | N/15mm | | % |
| Beispiele | 1 | 4,2 | 13 | 86 |
| | 2 | 5,7 | 15 | 83 |
| | 3 | 4,1 | 17 | 82 |
| | 4 | 4 | 16 | 84 |
| V-Beispiele | 1 | kein "Cold-Peel" | 17 | 82 |
| | 2 | Folie beim Öffnen eingerissen | 11 | 88 |
| | 3 | Folie beim Öffnen eingerissen | 9 | 4 |

**Patentansprüche**

1. Koextrudierte, transparente, biaxial orientierte Polyesterfolie, enthaltend eine Basisschicht (B) und eine heißsiegelbare und peelfähige Deckschicht (A), wobei

   a) der Polyester der Basisschicht (B) ein Copolyester ist, der aus mindestens 80 Mol-% an Einheiten aufgebaut ist, die auf eine aromatische Dicarbonsäure zurückgehen und auf der Diolseite auf Basis von aliphatischen Diolen aufgebaut ist, die 2-10 Mol-% Butandiol und 1-8 Mol-% Neopentylglykol enthalten, wobei die Summe der Molprozente der Dicarbonsäuren und Diole jeweils 100 % ergibt und der zu 100 Mol-% fehlende Anteil bei den Diolen Ethylenglykol ist, und
   die Deckschicht (A) heißsiegelbar und peelfähig ist und
   b) zu mindestens 80 Gew.-% aus einem Copolyester aufgebaut ist, der aus 25 bis 95 Mol-% an Einheiten aufgebaut ist, die auf mindestens eine aromatische Dicarbonsäure und 5 bis 75 Mol-% an Einheiten, die auf mindestens eine aliphatische Dicarbonsäure zurückgehen, wobei die Summe der dicarbonsäureabgeleiteten Molprozente 100 ergibt; und
   c) > 0 bis 10 Gew.-% anorganische und/oder organische Partikel mit einem mittleren Durchmesser $d_{50}$ von 2 bis 8 μm enthält.

2. Polyesterfolie nach Anspruch 1, wobei die Deckschicht (A) aufgrund der Zusammensetzung gemäß Anspruch 1 zu einer Menüschale aus aPET ein "Cold-Peel" aufweist, das gemessen bei 4 °C, im Bereich von 3 bis 7 N/15 mm liegt (= medium Cold-Peel).

3. Polyesterfolie nach Anspruch 1 oder 2, wobei der Copolyester der Basisschicht (B) aus den folgenden Dicarboxylaten und Alkylenen, jeweils bezogen auf die Gesamtdicarboxylat- bzw. Gesamtalkylenmenge, besteht:

   • 80 bis 100 Mol-%, bevorzugt 85 bis 100 Mol-% und besonders bevorzugt 90 bis 100 Mol-% Terephthalat
   • 0 bis 20 Mol-%, bevorzugt 0 bis 15 Mol-% und besonders bevorzugt 0 bis 10 Mol-% Isophthalat
   • 2 bis 10 Mol-%, bevorzugt 3 bis 9 Mol-% und besonders bevorzugt 4 bis 8 Mol-% 1,4-Butylen (abgeleitet von Butandiol)
   • 1 bis 8 Mol-%, bevorzugt 1,5 bis 7 Mol-% und besonders bevorzugt 2 bis 6 Mol-% 2,2-Dimethyl-1,3-propylen (abgeleitet von Neopentylglykol)
   • 82 bis 97 Mol-%, bevorzugt 84 bis 95,5 Mol-% und besonders bevorzugt 86 bis 94 Mol-% 1,2-Ethylen (abgeleitet von 1,2-Ethandiol)

   wobei sich die Molprozente der angeführten Dicarboxylate und Alkylene immer zu 100 % ergänzen.

4. Polyesterfolie nach Anspruch 1, 2 oder 3, wobei der Copolyester der Deckschicht (A) aus den folgenden Dicarboxylaten und Alkylenen, jeweils bezogen auf die Gesamtdicarboxylat- bzw. Gesamtalkylenmenge besteht:

   • 25 bis 95 Mol-%, bevorzugt 30 bis 90 Mol-% und besonders bevorzugt 40 bis 70 Mol-% Terephthalat
   • 0 bis 25 Mol-%, bevorzugt 5 bis 20 Mol-% und besonders bevorzugt 10 bis 20 Mol-% Isophthalat
   • 5 bis 75 Mol-%, bevorzugt 8 bis 70 Mol-% und besonders bevorzugt 11 bis 65 Mol-% Sebazat
   • 0 bis 50 Mol-%, bevorzugt 0 bis 40 Mol-% und besonders bevorzugt 0 bis 30 Mol-% Azelat
   • mehr als 50 Mol-%, bevorzugt mehr als 60 Mol-% und besonders bevorzugt mehr als 70 Mol-% Ethylen,

   wobei sich die Molprozente der angeführten Dicarboxylate und Alkylene immer zu 100 % ergänzen.

5. Polyesterfolie nach einem der Ansprüche 1-4, wobei die Deckschicht (A) ein mit Polyester unverträgliches Polymer (anti-PET-Polymer) enthält.

6. Polyesterfolie nach Anspruch 5, wobei der Anteil des anti-PET-Polymers - bezogen auf die Masse der Deckschicht (A) - 2 bis 20 Gew.-% beträgt.

7. Polyesterfolie nach Anspruch 5 oder 6, wobei das anti-PET-Polymer ein Polymer auf Basis von Ethylen, Propylen, Cycloolefinen, Amiden oder Styrol ist, bevorzugt ein Copolymer auf Basis von Ethylen, Propylen oder auf Basis von Cycloolefinen wie einem Norbornen/Ethylen- oder Tetracyclododecen/Ethylen-Copolymer, und besonders bevorzugt ein Cycloolefincopolymer (COC) ist.

8. Polyesterfolie nach Anspruch 5, 6 oder 7, wobei das anti-PET-Polymer ein Cycloolefincopolymer (COC) ist, das eine Glasübergangstemperatur von kleiner als 120 °C, bevorzugt kleiner als 100 °C und besonders bevorzugt kleiner als 80 °C aufweist.

9. Polyesterfolie nach einem der Ansprüche 1-8, wobei die Polyesterfolie dreischichtig aufgebaut ist und die Basisschicht (B), die heißsiegelbare und peelfähige Deckschicht (A) auf der einen Seite der Basisschicht (B) und eine Deckschicht (C) auf der anderen Seite der Basisschicht (B) aufweist und die Deckschicht (C) von der Rezeptur her der Basisschicht (B) entspricht und mit dieser identisch oder nicht identisch ist.

10. Polyesterfolie nach einem der Ansprüche 1-9, wobei die Gesamtdicke der Folie 10 bis 125 $\mu$m, bevorzugt 15 bis 120 $\mu$m und besonders bevorzugt 20 bis 115 $\mu$m beträgt.

11. Polyesterfolie nach einem der Ansprüche 1-10, wobei die Trübung der Folie weniger als 20 % beträgt und die Clarity der Folie größer als 80 % ist.

12. Verfahren zur Herstellung der Polyesterfolie nach Anspruch 1, wobei den einzelnen Schichten:

Deckschicht (A) und Basisschicht (B)
der Folie entsprechende Polyesterschmelzen durch eine Flachdüse koextrudiert werden, die so erhaltene Vorfolie zur Verfestigung auf einer oder mehreren Walzen abzieht, die Folie anschließend biaxial streckt und die biaxial gestreckte Folie thermofixiert und aufrollt, wobei der Polyester der Basisschicht (B) ein Copolyester ist, der aus mindestens 80 Mol-% an Einheiten aufgebaut ist, die auf eine aromatische Dicarbonsäure zurückgehen und auf der Diolseite auf Basis von aliphatischen Diolen aufgebaut ist, die 2-10 Mol-% Butandiol und 1-8 Mol-% Neopentylglykol enthalten, wobei die Summe der Molprozente der Dicarbonsäuren und Diole jeweils 100 % ergibt und der zu 100 Mol-% fehlende Anteil bei den Diolen Ethylenglykol ist, und die Deckschicht (A) zu mindestens 80 Gew.-%, aus einem Copolyester aufgebaut ist, der aus 25 bis 95 Mol-% an Einheiten aufgebaut ist, die auf mindestens eine aromatische Dicarbonsäure und 5 bis 75 Mol-% an Einheiten, die auf mindestens eine aliphatische Dicarbonsäure zurückgehen, wobei die Summe der dicarbonsäureabgeleiteten Molprozente 100 ergibt; und > 0 bis 10 Gew.-% anorganische und/oder organische Partikel mit einem mittleren Durchmesser d50 von 2 bis 8 $\mu$m enthält.

13. Verwendung der Folie nach einem der Ansprüche 1-11 zum Verpacken von Nahrungs-und Genussmitteln, insbesondere zur Verpackung von Nahrungs- und Genussmitteln.

14. Verwendung nach Anspruch 13 zur Verpackung von Nahrungs- und Genussmitteln in aPET-Menüschalen.

15. Verwendung nach Anspruch 13 oder 14 zur Verpackung von Nahrungs- und Genussmitteln in aPET-Menüschalen bei denen heißsiegelbare Polyesterfolien zum Verschließen der Verpackung verwendet werden.

# Fig. 1

# Fig. 2

# Fig. 3

# Fig. 4

Europäisches
Patentamt

European
Patent Office

Office européen
des brevets

# EUROPÄISCHER RECHERCHENBERICHT

**Nummer der Anmeldung**

EP 24 15 0853

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | US 2004/213967 A1 (PEIFFER HERBERT [DE] ET AL) 28. Oktober 2004 (2004-10-28) * Anspruch 1 * * Absätze [0054], [0057], [0105] - [0113] * | 1-15 | INV. B32B27/36 B32B7/022 B32B7/023 B32B7/027 B32B7/06 |
| A,D | US 2017/341355 A1 (PEIFFER HERBERT [DE] ET AL) 30. November 2017 (2017-11-30) * Ansprüche 1, 12 * * Absätze [0064], [0081] - [0083] * | 1-15 | B32B27/08 B32B27/16 B32B27/18 |
| A,D | US 2019/030874 A1 (PEIFFER HERBERT [DE] ET AL) 31. Januar 2019 (2019-01-31) * Ansprüche 1, 11 * * Absätze [0060], [0083] - [0085] * | 1-15 | |
| A | US 2011/171464 A1 (KONRAD MATTHIAS [DE] ET AL) 14. Juli 2011 (2011-07-14) * Anspruch 1 * * Absätze [0025], [0026], [0035], [0053] * | 1-15 | |

**RECHERCHIERTE SACHGEBIETE (IPC)**

B29C
B32B
B65D
C08J

Der vorliegende Recherchenbericht wurde für alle Patentansprüche erstellt

| Recherchenort | Abschlußdatum der Recherche | Prüfer |
|---|---|---|
| Den Haag | 14. Mai 2024 | Nowak, René |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
   Dokument

EPO FORM 1503 03.82 (P04C03)

21

**ANHANG ZUM EUROPÄISCHEN RECHERCHENBERICHT
ÜBER DIE EUROPÄISCHE PATENTANMELDUNG NR.**

EP 24 15 0853

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-05-2024

| Im Recherchenbericht angeführtes Patentdokument | Datum der Veröffentlichung | Mitglied(er) der Patentfamilie | Datum der Veröffentlichung |
|---|---|---|---|
| US 2004213967 A1 | 28-10-2004 | DE 10318097 A1 | 11-11-2004 |
| | | EP 1475228 A2 | 10-11-2004 |
| | | JP 2004322642 A | 18-11-2004 |
| | | KR 20040091572 A | 28-10-2004 |
| | | US 2004213967 A1 | 28-10-2004 |
| US 2017341355 A1 | 30-11-2017 | DE 102016209214 A1 | 30-11-2017 |
| | | EP 3248777 A1 | 29-11-2017 |
| | | JP 2017209996 A | 30-11-2017 |
| | | KR 20170134236 A | 06-12-2017 |
| | | PL 3248777 T3 | 30-09-2019 |
| | | US 2017341355 A1 | 30-11-2017 |
| US 2019030874 A1 | 31-01-2019 | DE 102017117328 A1 | 31-01-2019 |
| | | EP 3437853 A1 | 06-02-2019 |
| | | JP 2019025919 A | 21-02-2019 |
| | | KR 20190013604 A | 11-02-2019 |
| | | PL 3437853 T3 | 16-11-2020 |
| | | US 2019030874 A1 | 31-01-2019 |
| US 2011171464 A1 | 14-07-2011 | DE 102008046781 A1 | 18-03-2010 |
| | | EP 2337685 A1 | 29-06-2011 |
| | | JP 2012501886 A | 26-01-2012 |
| | | KR 20110053372 A | 20-05-2011 |
| | | US 2011171464 A1 | 14-07-2011 |
| | | WO 2010028774 A1 | 18-03-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 3248777 B1
- EP 3437853 B1
- EP 0379190 A
- WO 0205186 A1
- EP 1475228 B1
- EP 1068949 A
- JP 5009319 A
- EP 0283164 A
- EP 0407870 A
- EP 0485893 A
- EP 0503422 A

**In der Beschreibung aufgeführte Nicht-Patentliteratur**

- **AHLHAUS, O.E.** Verpackung mit Kunststoffen. Carl Hanser Verlag, 1997, 271